# EUROPÄISCHE PATENTSCHRIFT

(11) **EP 3 452 714 B1**
(45) Veröffentlichungstag und Bekanntmachung des Hinweises auf die Patenterteilung: **09.06.2021**
(21) Anmeldenummer: 17716893.7
(22) Anmeldetag: 11.04.2017
(51) Int. Cl.: F02M 21/02, F02D 19/06, F02D 19/10

(54) **EINRICHTUNG ZUR ZUMESSUNG EINES GASFÖRMIGEN BRENNSTOFFS ZU EINEM INJEKTOR**
DEVICE FOR METERING A GASEOUS FUEL TO AN INJECTOR
DISPOSITIF DE DOSAGE D'UN CARBURANT GAZEUX VERS UN INJECTEUR

(30) Priorität: 04.05.2016 DE 102016207743
(43) Veröffentlichungstag der Anmeldung: 13.03.2019
(73) Patentinhaber: Robert Bosch GmbH, 70442 Stuttgart (DE)
(72) Erfinder: VAHLE, Dirk, 71735 Eberdingen (DE)
(86) Internationale Anmeldenummer: PCT/EP2017/058691
(87) Internationale Veröffentlichungsnummer: WO 2017/190924

(56) Entgegenhaltungen:
- WO-A1-2007/029273
- FR-A1- 2 985 783
- US-A- 5 623 907
- US-A- 6 041 762
- US-B1- 8 935 078

## Beschreibung

Die Erfindung betrifft eine Einrichtung zur Zumessung eines gasförmigen Brennstoffs zur einem Injektor insbesondere einer gasbetriebenen Brennkraftmaschine, wobei die Einrichtung zumindest ein Ventil aufweist und der Injektor zur Einbringung des gasförmigen Brennstoffs in einen Brennraum der Brennkraftmaschine ausgebildet ist.

### Stand der Technik

Eine derartige Einrichtung zur Zumessung eines gasförmigen Brennstoffs zu einem Injektor einer gasbetriebenen Brennkraftmaschine ist aus der CA 2 884 945 A1 bekannt. Diese gasbetriebene Brennkraftmaschine weist einen als Dual-Fuel-Kraftstoffinjektor ausgebildeten Injektor auf, mit dem ein Dieselkraftstoff und ein gasförmiger Kraftstoff in einen Brennraum der Brennkraftmaschine eingebracht werden können. Die Einrichtung weist für jeden Kraftstoffzweig zumindest ein Ventil auf, mit dem die jeweilige Kraftstoffzufuhr zu dem Dual-Fuel-Kraftstoffinjektor eingestellt werden kann.

Aus der US 4,693,267 ist ein Druckregelventil für den Anlagenbau bekannt, dass mehrere Regelfunktionen ermöglicht. Aus der US 5 623 907 ist darüber hinaus ein System für flüssiges Propan bekannt mit einer Druckregelung, aus der WO 2007/029273 A1 ein Multiventil mit einem Gasdruckregler und aus FR 2 985 783 eine weitere Ventilvorrichtung.

Der Erfindung liegt die Aufgabe zugrunde, eine Einrichtung zur Zumessung eines gasförmigen Brennstoffs zur einem Injektor insbesondere einer gasbetriebenen Brennkraftmaschine bereitzustellen, bei der eine gegenüber dem Stand der Technik insbesondere hinsichtlich ihres Bauaufwands verbesserte Einrichtung zur Zumessung des gasförmigen Brennstoffs zu dem Injektor vorgesehen ist.

### Offenbarung der Erfindung

Diese Aufgabe wird dadurch gelöst, dass die Einrichtung eine Druckregeleinheit mit einem Absperrventil, einem Druckregelventil und einem Absteuerventil ist, und dass das Absperrventil, das Druckregelventil sowie das Absteuerventil eine als Baueinheit gemäß den Merkmalen des Anspruchs 1 ausgestaltete Funktionseinheit ist. Diese Druckregeleinheit mit den drei Ventilen ermöglicht eine individuelle Einstellung des dem jeweiligen Brennraum der Brennkraftmaschine zuzuführenden gasförmigen Brennstoffs. Mittels des Absperrventils kann der Gasfluss zu dem Injektor gänzlich abgesperrt werden, während in dem Druckregelventil der Gasdruck des Gasflusses zu dem Injektor eingestellt werden kann. Mittels des Absteuerventils kann der in der Baueinheit herrschende Gasdruck auf ein niedriges Druckniveau abgesenkt werden. Die Baueinheit umfasst demzufolge die zuvor dargestellten drei Ventile und kann insbesondere kompakter und auch funktionssicherer als die entsprechenden Einzelventile ausgestaltet sein. Zudem können die Herstellungskosten reduziert werden.

Dabei weist die Baueinheit einen gemeinsamen Steller für das Absperrventil, das Druckregelventil und das Absperrventil auf. Dies trägt zu einem kompakten Aufbau der Baueinheit bei und es ist dadurch eine zuverlässige Steuerung des gasförmigen Brennstoffs ermöglicht.

Der Steller kann als ein elektrohydraulischer und/oder elektropneumatischer Steller ausgebildet sein. Dies sind die bevorzugten Ausgestaltungen, wobei hier aber grundsätzlich auch noch andere Steller in Betracht kommen. Bei dem elektrohydraulischen Steller wird ein Hydraulikfluss von einem elektrischen Aktor eingestellt. Das Hydraulikfluid kann beispielsweise ein Kraftstoff, insbesondere Dieselkraftstoff, sein. In diesem Fall ist dann der Steller ein Dieseldrucksteuerventil.

Weiterhin weist die Baueinheit einen Steuerventilkörper, einen Gasventilkörper und eine Gasventilkörperverschlussschraube auf. In diese Gehäusekomponenten können alle die zuvor genannten Ventile bildenden Komponenten integriert sein.

Dabei ist der Steller an dem Steuerventilkörper angebaut, und ein von dem Steller beherrschter Steuerraum ist von einem in dem Gasventilkörper eingebauten Gassteuerkolben durch eine Membran getrennt. Durch diese Ausgestaltung sind die unterschiedlichen Brennstoffe zuverlässig getrennt und damit ein zuverlässiger Betrieb der Baueinheit sichergestellt. Der Anbau beziehungsweise die Integration des Stellers an oder in den Steuerventilkörper trägt einer weiteren Erhöhung der Kompaktheit der so gebildeten Baueinheit und ihres Bauaufwands bei.

Der Gassteuerkolben wirkt direkt oder indirekt mit einem Gasschaltkolben zusammen. Dabei bildet der Gassteuerkolben zusammen mit dem Gasschaltkolben das Absteuerventil, während das Absperrventil und das Druckregelventil zusammen von dem Gasschaltkolben zusammenwirkend mit dem Gasventilkörper gebildet sind. Somit werden drei Ventilfunktionen von zwei bewegten Bauteilen ausgeübt. Dies führt zu einem kompakten Aufbau und einer betriebssicheren Betätigung der Baueinheit.

Das Absperrventil und das Druckregelventil sind von einem Gaseinlassventil gebildet und das Gaseinlassventil wirkt mit dem Gasschaltkolben zusammen. Durch diese Ausgestaltung wird ein Verzögerungsglied in die Druckregeleinheit integriert.

Weitere vorteilhafte Ausgestaltungen der Erfindung sind der Zeichnungsbeschreibung zu entnehmen, in der in den Figuren dargestellte Ausführungsbeispiele näher beschrieben sind.

Es zeigen:
Figur 1 eine schematische Darstellung eines Gassystems und eines Dieselkraftstoffsystems, die gemeinsam mit einem Injektor zusammenwirken,
Figur 2 eine Darstellung einer Druckregeleinheit eines Gassystems mit einem Absperrventil, einem Druckregelventil und einem Absteuerventil, die eine Baueinheit bilden und
Figur 3 eine Darstellung einer Druckregeleinheit eines Gassystems mit einem Absperrventil, einem Druckregelventil und einem Absteuerventil, die zusammen eine zweite Ausführungsform einer Baueinheit bilden.

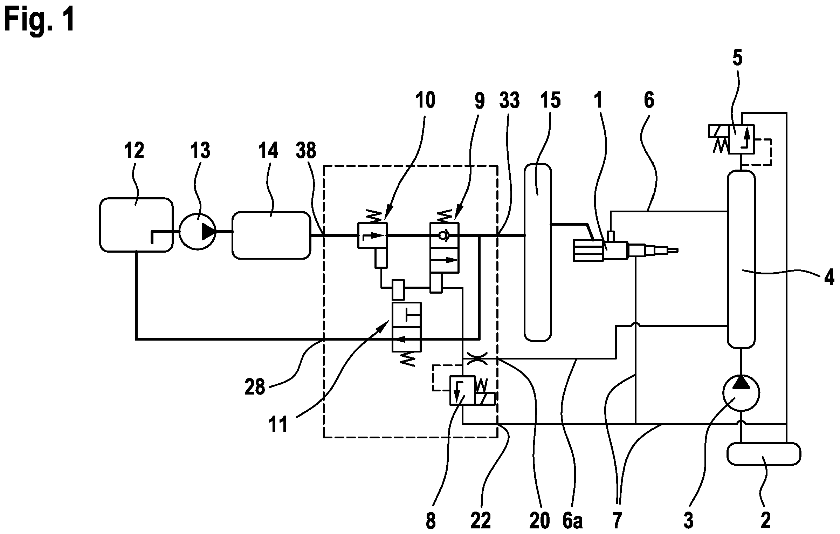

Figur 1 zeigt eine schematische Darstellung eines Gassystems und eines Dieselkraftstoffsystems, die beide mit einem Injektor 1 zusammenwirken. Die zuvor genannten Systeme beziehungsweise Bauteile sind Bestandteil einer gasbetriebenen Brennkraftmaschine, wobei mittels des Injektors 1 in einen Brennraum der Brennkraftmaschine Brenngas und Diesel zum Betrieb der Brennkraftmaschine eingebracht werden können. In dem Brennraum verbrennen das Brenngas und/oder der Diesel unter Hinzufügung von eingebrachter Brennluft unter Erzeugung von an eine Kurbelwelle abgegebener Arbeitsleistung. Die Brennkraftmaschine ist bevorzugt in ein Fahrzeug und/oder eine Maschine zum Betrieb des Fahrzeugs oder der Maschine eingebaut.

Das Dieselkraftstoffsystem ist beispielsweise als Common-Rail-System ausgebildet und weist einen Dieselkraftstofftank 2 auf, in dem Kraftstoff in Form von Diesel bevorratet wird, der von einer Dieselhochdruckpumpe 3 in einen Dieselhochdruckspeicher 4 gefördert wird. In dem Dieselhochdruckspeicher 4 ist Diesel unter einem Druck von beispielsweise bis zu 1.000 bar gespeichert, wobei der Druck in dem Dieselhochdruckspeicher 4 beispielsweise von einem Dieseldruckregelventil 5 auf den zuvor genannten Druck eingestellt beziehungsweise eingeregelt wird. Der Injektor 1 ist mit dem Dieselhochdruckspeicher 4 über eine Dieselhochdruckleitung 6 verbunden und der Injektor 1 weist eine interne Dieselsteuereinrichtung zur Bestimmung der durch den Injektor 1 in den Brennraum eingespritzten Menge von Diesel auf. Der Injektor 1 weist weiterhin eine Dieselrückführleitung 7 auf, die letztendlich in den Dieselkraftstofftank 2 einmündet. Weiterhin ist der Dieselhochdruckspeicher 4 über eine Dieselhochdruckleitung 6a mit einem als Dieseldrucksteuerventil 8 ausgebildeten Öldruckventil verbunden, das zur Ansteuerung einer durch eine strichlinierte Umrandung dargestellte Druckregeleinheit des Gassystems herangezogen wird und somit ein wesentlicher Bestandteil der so gebildeten Druckregeleinheit ist. Die Druckregeleinheit besteht aus einem Absperrventil 9, einem Druckregelventil 10 und einem Absteuerventil 11 für das Brenngas und dem Drucksteuerventil 8. Mit dem Dieseldrucksteuerventil 8 werden die zuvor genannten drei Ventile angesteuert, wobei diesbezügliche Details nachfolgend noch genauer erläutert werden. Das Gassystem weist einen Gastank 12 auf, in dem das Brenngas bevorratet ist und wobei eine Hochdruckgaspumpe 13 Brenngas in einen Pufferspeicher 14 fördert. An den Pufferspeicher 14 ist die Druckregeleinheit, bestehend aus dem Dieseldrucksteuerventil 8, dem Absperrventil 9, dem Druckregelventil 10 und dem Absteuerventil 11 angeschlossen beziehungsweise diesem nachgeschaltet. Das Druckregelventil 10 und das Absperrventil 9 sind in Reihe geschaltet und verbinden den Pufferspeicher 14 mit einem Hochdruckspeicher 15, der wiederum über eine Hochdruckleitung mit dem als Zweistoffinjektor ausgebildeten Injektor 1 verbunden ist. Die Anordnung von dem Druckregelventil 10 und dem Absperrventil 9 kann auch vertauscht sein. Das Absteuerventil 11 verbindet einen mit dem Hochdruckspeicher 15 verbundenen Gasausgang 33 aus der Druckregeleinheit wiederum mit dem Gastank 12.

In den nachfolgenden Figuren wird die zuvor beschriebene Druckregeleinheit, die aus dem Dieseldrucksteuerventil 8, dem Absperrventil 9, dem Druckregelventil 10 und dem Absteuerventil 11 besteht, in zwei Ausführungsbeispielen näher beschrieben.

Die Druckregeleinheit ist als eine eine Baueinheit bildende Funktionseinheit ausgebildet und weist einen Steuerventilkörper 16, einen Gasventilkörper 17 und eine Gasventilkörperverschlussschraube 18 auf. Das Dieseldrucksteuerventil 8 ist an dem Steuerventilkörper 16 angebaut und stellt den Kraftstoffdruck in einem Steuerraum 19 ein, in dem die Absteuerung der Menge des in dem Steuerraum 19 über einen mit der Dieselhochdruckleitung 6a verbundenen Dieselzugang 20 und eine Dieseldrossel 21 zugeführte Dieselmenge in einen Dieselabgang 22 eingestellt wird. Der Dieselabgang 22 ist über die Dieselrückführleitung 7 mit dem Dieselkraftstofftank 2 verbunden. Der Steuerraum 19 grenzt an den Gasventilkörper 17 an und ist von diesem mittels einer Membran 23 getrennt. In dem Gasventilkörper 17 ist eine Zylinderführung 24 für einen Gassteuerkolben 25 eingelassen, der von dem Kraftstoffdruck in dem Steuerraum 19 gegen die Kraft einer Gassteuerkolbenfeder 26 in der Zylinderführung 24 verstellbar ist. Je nach dem in dem Steuerraum 19 herrschenden Druck wird der Gassteuerkolben 25 in die Zylinderführung 24 nach rechts gegen die Kraft der Gassteuerkolbenfeder 26 verschoben. In den Gassteuerkolben 25 ist eine Gasabsteuerleitung 27a, 27b eingelassen, die mit einem Gasabsteueranschluss 28 zusammenwirken. Der Gasabsteueranschluss 28 ist über die in Figur 1 dargestellte Gasabsteuerleitung mit dem Gastank 12 verbunden. Die Gasabsteuerleitung 27a bildet in dem Gassteuerkolben 25 einen Ventilsitz 29 für eine Ventilspitze 30 eines Gasschaltkolbens 31, der in einer Schaltkolbenführung 32 in dem Gassteuerkolben 25 geführt ist. In den Gasventilkörper 17 sind den Gasschaltkolben 31 umfassend Strömungskanäle 41 zur Führung von Gas eingelassen. Im Ruhezustand befinden sich der Gassteuerkolben 25 und der Gasschaltkolben 31 in der dargestellten Stellung und eine Strömungsverbindung zwischen dem Gasausgang 33 und dem Gasabsteueranschluss 28 ist freigegeben.

Bei ansteigendem Druck in dem Steuerraum 19 wird der Gassteuerkolben 25 zunehmend nach rechts verfahren und der Ventilsitz 29 wird gegen die Ventilspitze 30 verstellt, bis die Verbindung zwischen dem Gasausgang 33 und dem Gasabsteueranschluss 28 unterbrochen ist. In einem Gassteuerkolbenfederraum 34 befindliches Brenngas kann nicht mehr in den Gasabsteueranschluss 28 gelangen.

Bei weiter zunehmendem Druck in dem Steuerraum 19 wird der Gassteuerkolben 25 weiter nach rechts verfahren und bewegt den Gasschaltkolben 31 nunmehr in Richtung eines Gaseinlassraums 35, der in der Gasventilkörperverschlussschraube 18 gebildet ist. Der Gasschaltkolben 31 ist gegen die Kraft einer Gasvorspannfeder 36 bis zum Anschlag an eine Hubanschlagscheibe 37 verfahrbar und stellt eine Verbindung zwischen einem Gaseinlass 38 und letztendlich dem Gassteuerkolbenfederraum 34 her. Diese Verbindung wird zwischen dem Gaseinlassraum 35 entlang einer Strömungsverbindung zwischen einem Gasschaltkolbenteller 39 und einer Gasschaltkolbenanschlagfläche 40, die an dem Gasventilkörper 17 gebildet ist, über die Strömungskanäle 41 mit dem Gassteuerkolbenfederraum 34 hergestellt.

Bei der Ansteuerung des Gasschaltkolbens 31 durch den Gassteuerkolben 25 ist die Gasabsteueranschluss 28 abgesperrt und je nach der Öffnungsstellung des Gasschaltkolbens 31 strömt mehr oder weniger Gas von dem Gaseinlass 38 in den Gasausgang 33. Entsprechend sind von dem Gasschaltkolben 31 zusammen mit dem Gasschaltkolbenteller 39 beziehungsweise der Gasschaltkolbenanschlagfläche 40 sowie den zusammenwirkenden Bauteilen das Absperrventil 9 und das Druckregelventil 10 gebildet.

Ist das gewünschte Gasdruckniveau in dem Gasausgang 33 erreicht, wird das Dieseldrucksteuerventil 8 angesteuert und senkt den Steuerdruck in dem Steuerraum 19 über Absteuerung von Diesel in den Dieselabgang 22 ab. Durch die sich damit ändernden Kraftverhältnisse an dem Gassteuerkolben 25 bewegt sich dieser - unterstützt durch die Kraft der Gassteuerkolbenfeder 26 - in Richtung zu dem Steuerraum 19. Abhängig vom Hub des Kolbenverbundes aus dem Gassteuerkolben 25 und dem Gasschaltkolben 31 wird zuerst der zwischen dem Gasschaltkolbenteller 39 und der Gasschaltkolbenanschlagfläche 40 gebildete Dichtsitz (beziehungsweise die zuvor genannte Strömungsverbindung) verschlossen. Unmittelbar darauf öffnet sich - abhängig von der Elastizität des Gasschaltkolbens 31 und des zuvor genannten Dichtsitzes - auch der zwischen dem Ventilsitz 29 und der Ventilspitze 30 gebildete Dichtsitz. Sobald dieser öffnet, strömt Brenngas aus dem Gasausgang 33 in den Gasabsteueranschluss 28 und somit in den Gastank 12 ab. Dadurch sinkt der Gasdruck in dem Gasausgang 33 ab. Fällt der Druck in dem Gasausgang 33 unter den eingestellten Steuerdruck im Steuerraum 19 ab, wird der Gassteuerkolben 25 wieder in Richtung Gasschaltkolben 31 gedrückt, bis der Ventilsitz zwischen dem Ventilsitz 29 und der Ventilspitze 30 geschlossen wird und der Dichtsitz zwischen dem Gasschaltkolbenteller 39 und der Gasschaltkolbenanschlagfläche 40 öffnet. Dadurch regelt sich durch den Gasschaltkolben 31 selbstständig - abhängig vom eingestellten Steuerdruck in dem Steuerraum 19 - ein stabiles Gasdruckniveau in dem Gasausgang 33 durch abwechselnden Gaseinlass durch den Gaseinlass 38 und Gasauslass in den Gasausgang 33 ein.

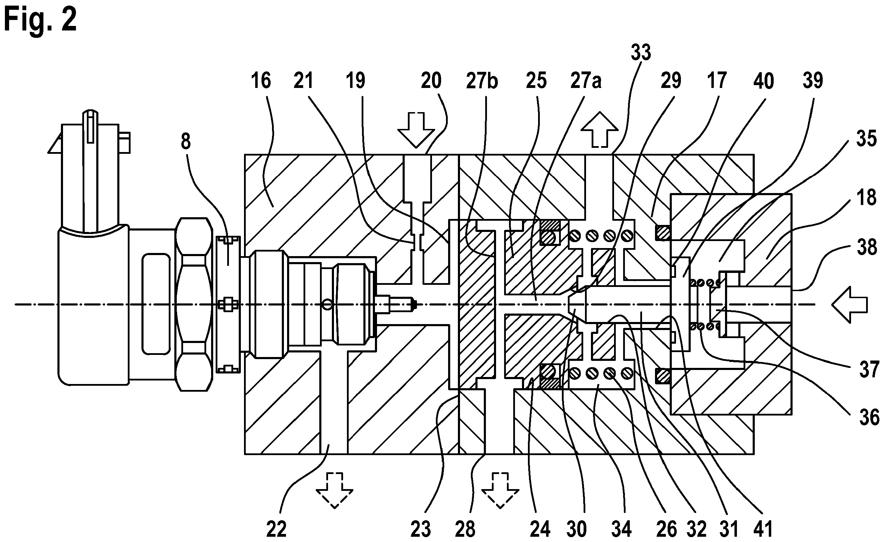

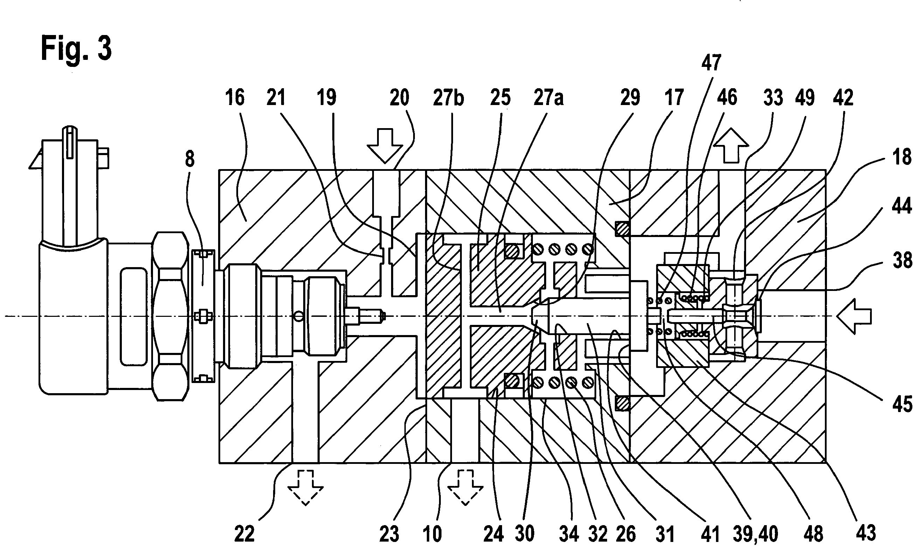

Aufgrund der Verwendung nur eines Gassteuerkolbens 25 ist das hydraulische Übersetzungsverhältnis zwischen dem Steuerraum 19 und dem Gasausgang 33 geometrisch auf 1:1 festgelegt. Durch die Gassteuerkolbenfeder 26 wird auf der Gasseite eine Haltekraft an dem Gassteuerkolben 25 aufgebracht. Diese Haltekraft muss von dem Steuerdruck im Steuerraum 19 überdrückt werden. Dadurch ist das aufsummierte Kraftverhältnis am Gassteuerkolben 25 ungleich 1:1. Für eine Darstellung der beschriebenen Schaltfunktionen muss somit der Druck in dem Steuerraum 19 immer über dem Druck in dem Gasausgang 33 liegen. Über die Vorspannung der Gassteuerkolbenfeder 26 wird der erforderliche Überdruck im Steuerraum 19 festgelegt. In der in Figur 2 dargestellten Ausführungsform werden die Schaltfunktionen durch die in dem Gasschaltkolben 31 und im Dichtsitz zwischen dem Gasschaltkolbenteller 39 und der Gasschaltkolbenanschlagfläche 40 enthaltene Elastizität verzögert, die aber nur relativ gering ist. Um ein Verzögerungsglied zu erhalten, muss der Dichtsitz zwischen dem Gasschaltkolbenteller 39 und der Gasschaltkolbenanschlagfläche 40 von dem Gasschaltkolben 31 getrennt sein. Ein hierfür beispielhafter konstruktiver Aufbau ist in der Figur 3 dargestellt.

Hier ist ein zusätzliches Gaseinlassventil 42 vorgesehen, das mit einer Spannschraube 43 in der Gasventilkörperverschlussschraube 18 verschraubt ist. In das Gaseinlassventil 42 integriert ist ein Gaseinlassdichtsitz 44, eine Hubbegrenzung 49 für einen Gaseinlassventilkolben 45 und eine Gaseinlassventilkolbenfeder 46.

Der Gasschaltkolben 31 hat nun anstatt eines Dichtsitzes zwischen dem Gasschaltkolbenteller 39 und der Gasschaltkolbenanschlagfläche 40 eine Hubbegrenzung zum Gasventilkörper 17. Um den Schaltkolben in der Hubbegrenzung zu halten, kann zwischen dem Gaseinlassventil 42 und dem Gasschaltkolben 31 eine Vorspannfeder 47 eingesetzt werden. Alternativ kann die Vorspannfeder 47 auch zwischen dem Gasschaltkolben 31 und der Spannschraube 43 eingesetzt werden.

Durch den Hubspalt 48 zwischen dem Gasschaltkolben 31 und dem Gaseinlassventilkolben 45 ergibt sich die gewünschte Verzögerung in der Regelcharakteristik. Um den Öffnungshub für das Gaseinlassventil 42 zu begrenzen, kann ein Hubanschlag auch zwischen dem Gasschaltkolben 31 und der Spannschraube 43 eingerichtet sein.

## Patentansprüche

1. Einrichtung zur Zumessung eines gasförmigen Brennstoffs zu einem Injektor (1) insbesondere einer gasbetriebenen Brennkraftmaschine, wobei die Einrichtung zumindest ein Ventil aufweist und der Injektor (1) zur Einbringung des gasförmigen Brennstoffs in einen Brennraum der Brennkraftmaschine ausgebildet ist, wobei die Einrichtung eine Druckregeleinheit mit einem Absperrventil (9), einem Druckregelventil (10) und einem Absteuerventil (11) ist, und dass das Absperrventil (9), das Druckregelventil (10) sowie das Absteuerventil (11) eine Baueinheit bilden,
**dadurch gekennzeichnet, dass**
die Baueinheit einen gemeinsamen Steller für das Absperrventil (9), das Druckregelventil (10) und das Absteuerventil (11) und einen Steuerventilkörper (16), einen Gasventilkörper (17) und eine Gasventilkörperverschlussschraube (18) aufweist, wobei der Steller an dem Steuerventilkörper (16) angebaut ist, und ein von dem Steller beherrschter Steuerraum (19) von einem in dem Gasventilkörper (17) eingesetzten Gassteuerkolben (25) durch eine Membran (23) getrennt ist, wobei im Gassteuerkolben (25) eine Gasabsteuerleitung (27a) ausgebildet ist, die in dem Gassteuerkolben (25) einen Ventilsitz (29) für eine Ventilspitze (30) eines Gasschaltkolbens (31) bildet und der Gassteuerkolben (25) zusammen mit dem Gasschaltkolben (31) das Absteuerventil (11) bildet, wobei der Gasschaltkolben (31) zusammen mit dem Gasventilkörper (17) das Absperrventil (9) und das Druckregelventil (10) ausbildet oder
das Absperrventil (9) und das Druckregelventil (10) von einem Gaseinlassventil (42) gebildet sind, und dass das Gaseinlassventil (42) mit dem Gasschaltkolben (31) zusammenwirkt.

## Claims

1. Device for metering a gaseous fuel to an injector (1) in particular of a gas-powered internal combustion engine, wherein the device has at least one valve and the injector (1) is designed to introduce the gaseous fuel into a combustion chamber of the internal combustion engine, wherein the device is a pressure-regulating unit having a shut-off valve (9), a pressure-regulating valve (10) and a discharge valve (11), and that the shut-off valve (9), the pressure-regulating valve (10) and the discharge valve (11) form a structural unit,
**characterized in that**
the structural unit has a common actuator for the shut-off valve (9), the pressure-regulating valve (10) and the discharge valve (11) and also has a control-valve body (16), a gas-valve body (17) and a gas-valve-body closure screw (18), wherein the actuator is fitted on the control-valve body (16), and a control chamber (19), which is controlled by the actuator, is separated by a membrane (23) from a gas-control piston (25) inserted in the gas-valve body (17), wherein a gas-discharge line (27a) is formed in the gas-control piston (25) and, in the gas-control piston (25), forms a valve seat (29) for a valve top (30) of a gas-switching piston (31), and the gas-control piston (25) together with the gas-switching piston (31) forms the discharge valve (11), wherein
the gas-switching piston (31) together with the gas-valve body (17) forms the shut-off valve (9) and the pressure-regulating valve (10), or
the shut-off valve (9) and the pressure-regulating valve (10) are formed by a gas-inlet valve (42), and **in that** the gas-inlet valve (42) interacts with the gas-switching piston (31).

## Revendications

1. Dispositif de dosage d'un carburant gazeux vers un injecteur (1), en particulier d'un moteur à combustion interne fonctionnant au gaz, le dispositif présentant au moins une soupape et l'injecteur (1) étant réalisé pour introduire du carburant gazeux dans une chambre de combustion du moteur à combustion interne, le dispositif étant une unité de régulation de la pression avec un clapet antiretour (9), une soupape de régulation de la pression (10) et une soupape de coupure (11), et en ce que le clapet antiretour (9), la soupape de de régulation de la pression (10) et la soupape de coupure (11) forment une unité structurelle,
**caractérisé en ce que**
l'unité structurelle présente un actionneur commun pour le clapet antiretour (9), la soupape de régulation de la pression (10) et la soupape de coupure (11), et un corps de soupape de commande (16), un corps de soupape à gaz (17) et une vis de fermeture du corps de soupape à gaz (18), l'actionneur étant monté sur le corps de soupape de commande (16), et un espace de commande (19) commandé par l'actionneur étant séparé d'un piston de commande de gaz (25) inséré dans le corps de soupape à gaz (17) par une membrane (23), une conduite de coupure de gaz (27a) étant réalisée dans le piston de commande de gaz (25), laquelle forme dans le piston de commande de gaz (25) un siège de soupape (29) pour une pointe de soupape (30) d'un piston de commutation de gaz (31) et le piston de commande de gaz (25) formant conjointement avec le piston de commutation de gaz (31) la soupape de coupure (11), le piston de commutation de gaz (31) constituant conjointement avec le corps de soupape à gaz (17) le clapet antiretour (9) et la soupape de régulation de la pression (10), ou
le clapet antiretour (9) et la soupape de régulation de la pression (10) étant formés par une soupape d'entrée de gaz (42) et **en ce que** la soupape d'entrée de gaz (42) coopère avec le piston de commutation de gaz (31).
